# EUROPEAN PATENT APPLICATION

(11) **EP 4 529 196 A1**
(43) Date of publication of application: **26.03.2025**
(21) Application number: 23896549.5
(22) Date of filing: 16.11.2023
(51) Int. Cl.: H04N 21/472

(54) **VIDEO-BASED INTERACTION METHOD AND APPARATUS, DEVICE, AND STORAGE MEDIUM**

(30) Priority: 29.11.2022 CN 202211517335
(71) Applicant: Beijing Zitiao Network Technology Co., Ltd., Beijing 100190 (CN)
(72) Inventor: LUO, Song, Beijing 100028 (CN)
(74) Representative: Williams, Michael David
(86) International application number: PCT/CN2023/132055
(87) International publication number: WO 2024/114397

(57) **Abstract**

The present disclosure provides a video-based interaction method, apparatus, and device, and a storage medium. The method includes: first, obtaining, in response to a preset trigger operation acting on a first play page of a first video, a second video corresponding to the first video, where the first video includes some video clips in the second video, and video duration of the first video is less than that of the second video; and then jumping to a second play page from the first play page, and playing the second video on the second play page. It can be learned that, for videos having some video clips in common but having different video duration, in embodiments of the present disclosure, a jump can be made between video play pages, thereby enriching a video-based interaction function and improving the video-based interaction experience of a user.

## Description

The present application is based on and claims priority to Chinese Patent Application No. 202211517335.1, filed on November 29, 2022, the disclosure of which is incorporated herein by reference in its entirety.

### TECHNICAL FIELD

The present disclosure relates to the field of data processing, and in particular, to a video-based interaction method, apparatus, and device, and a storage medium.

### BACKGROUND

With the continuous development of video processing technologies, people have increasingly diverse requirements for an interaction function in a video play process.

Therefore, how to enrich an interaction function in a video play process to improve user experience is a technical problem that needs to be solved urgently at present.

### SUMMARY

To solve the above technical problem, an embodiment of the present disclosure provides a video-based interaction method.

According to a first aspect, the present disclosure provides a video-based interaction method. The method includes:
Obtaining, in response to a preset trigger operation acting on a first play page of a first video, a second video corresponding to the first video, where the first video includes some video clips in the second video, and video duration of the first video is less than that of the second video; and
jumping to a second play page from the first play page, and playing the second video on the second play page.

In an optional implementation, after the playing the second video on the second play page, the method further includes:
zooming out the second play page to a preset display location on the first play page by using a preset page transition effect, in response to a preset return operation acting on the second play page, where the preset display location is used to display an access entry for the second video.

In an optional implementation, after the zooming out the second play page to a preset display location on the first play page by using a preset page transition effect, the method further includes:
displaying preset prompt information at the preset display location on the first play page, in response to the second play page displayed at the preset display location entering a hidden state, where the preset prompt information is used to prompt triggering, based on the access entry, of an access operation for the second video.

In an optional implementation, the method further includes:
in response to a trigger operation for the access entry on the first play page, jumping to a video set presentation page from the first play page, and presenting the second video in a first place on the video set presentation page where the video set presentation page is used to present videos of the same video type as the second video, and the video type is determined based on the video duration.

In an optional implementation, after the zooming out the second play page to a preset display location on the first play page by using a preset page transition effect, the method further includes:
playing a third video on the first play page, where the third video and the first video are videos of the same video type, and the video type is determined based on the video duration.

In an optional implementation, the obtaining, in response to a preset trigger operation acting on a first play page of a first video, a second video corresponding to the first video includes:
obtaining the second video corresponding to the first video in response to a trigger operation for a preset control on the first play page of the first video, where the preset control is arranged in a preset information display region on the first play page.

In an optional implementation, before the jumping to a second play page from the first play page, and playing the second video on the second play page, the method further includes:
obtaining current play progress information of the first video in response to a preset trigger operation acting on the first play page of the first video; and
correspondingly, the jumping to a second play page from the first play page, and playing the second video on the second play page includes:
   jumping to the second play page from the first play page, and determining a play start time of the second video based on the current play progress information of the first video and a play timeline relationship between the first video and the second video; and
   playing the second video on the second play page based on the play start time of the second video.

According to a second aspect, the present disclosure provides a video-based interaction apparatus. The apparatus includes:
a first obtaining module, configured to obtain ,in response to a preset trigger operation acting on a first play page of a first video, a second video corresponding to the first video; where the first video includes some video clips in the second video, and video duration of the first video is less than that of the second video; and
a first jumping module, configured to jump to a second play page from the first play page, and play the second video on the second play page.

According to a third aspect, the present disclosure provides a computer-readable storage medium, where the computer-readable storage medium stores instructions therein, and the instructions, when run on a terminal device, cause the terminal device to implement the method described above.

According to a fourth aspect, the present disclosure provides a video-based interaction device. The device includes: a memory, a processor, and a computer program stored in the memory and runnable on the processor. The computer program, when executed by the processor, causes the method described above to be implemented.

According to a fifth aspect, the present disclosure provides a computer program product. The computer program product includes a computer program/instruction. The computer program/instruction, when executed by a processor, causes the method described above to be implemented.

Compared to the prior art, the technical solutions provided in the embodiments of the present disclosure have at least the following advantages.

In the video-based interaction method provided by the embodiments of the present disclosure, first, the second video corresponding to the first video is obtained in response to the preset trigger operation acting on the first play page of the first video. The first video includes some video clips in the second video, and the video duration of the first video is less than that of the second video. Then the jumping to the second play page from the first play page is performed, and the second video is played on the second play page. It can be learned that, for videos having some video clips in common but having different video duration, in this embodiment of the present disclosure, a jump can be made between video play pages, thereby enriching a video-based interaction function and improving the video-based interaction experience of a user.

### BRIEF DESCRIPTION OF THE DRAWINGS

The accompanying drawings herein, which are incorporated into and form a part of the description, illustrate the embodiments in line with the present disclosure and are used in conjunction with the description to explain the principles of the present disclosure.

In order to more clearly illustrate the technical solutions in the embodiments of the present disclosure or in the prior art, the accompanying drawings for describing the embodiments or the prior art will be briefly described below. Apparently, those of ordinary skill in the art may still derive other drawings from these accompanying drawings without creative efforts.
FIG. 1 is a flowchart of a video-based interaction method according to an embodiment of the present disclosure;
FIG. 2 is a schematic diagram of a first play page according to an embodiment of the present disclosure;
FIG. 3 is a schematic diagram of a second play page according to an embodiment of the present disclosure;
FIG. 4 is a schematic diagram of another first play page according to an embodiment of the present disclosure;
FIG. 5 is a schematic diagram of still another first play page according to an embodiment of the present disclosure;
FIG. 6 is a schematic diagram of a video set presentation page according to an embodiment of the present disclosure;
FIG. 7 is a schematic diagram of a structure of a video-based interaction apparatus according to an embodiment of the present disclosure; and
FIG. 8 is a schematic diagram of a structure of a video-based interaction device according to an embodiment of the present disclosure.

### DETAILED DESCRIPTION

For a clearer understanding of the above objectives, features, and advantages of the present disclosure, the solutions of the present disclosure will be further described below. It should be noted that the embodiments of the present disclosure and features in the embodiments may be combined with each other without conflict.

Many specific details are set forth in the following description to facilitate a full understanding of the present disclosure. However, the present disclosure may also be implemented in other ways different from those described herein. Apparently, the embodiments in the description are only some rather than all of the embodiments of the present disclosure.

With the continuous development of video processing technologies, people have increasingly diverse requirements for interaction functions in a video play process.

Therefore, how to enrich an interaction function in a video play process to improve user experience is a technical problem that needs to be solved urgently at present.

To this end, an embodiment of the present disclosure provides a video-based interaction method, including: first, obtaining a second video corresponding to a first video in response to a preset trigger operation acting on a first play page of the first video, where the first video includes some video clips in the second video, and video duration of the first video is less than that of the second video; and then jumping to a second play page from the first play page, and playing the second video on the second play page. It can be learned that, for videos having some video clips in common but having different video duration, in this embodiment of the present disclosure, a jump can be made between video play pages, thereby enriching a video-based interaction function and improving the video-based interaction experience of a user.

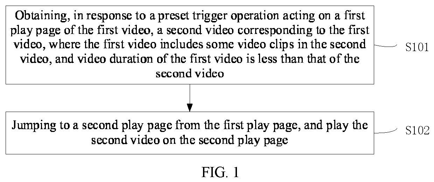

Based on this, an embodiment of the present disclosure provides a video-based interaction method. FIG. 1 is a flowchart of a video-based interaction method according to an embodiment of the present disclosure. The method includes:
S101: Obtain, in response to a preset trigger operation acting on a first play page of a first video, a second video corresponding to the first video. The first video includes some video clips in the second video, and video duration of the first video is less than that of the second video.

In an optional implementation, the first video and the second video may be different types of videos determined based on video duration, and the different types of videos determined based on the video duration may include long-form videos and short-form videos. For example, a short-form video may be a video with video duration of 0 to 4 minutes, such as a highlight clip in a movie or a movie promotional clip. A long-form video may be a video with video duration of more than 30 minutes, such as a movie or an episode.

It should be noted that in this embodiment of the present disclosure, the video duration of the first video is less than that of the second video. For example, the first video is a short-form video, and the second video is a long-form video. Content of the first video is related to that of the second video. Specifically, the first video includes some video clips in the second video, that is, the first video may include one or more video frames in the second video. For example, assuming that the second video belongs to movies, TV series, concerts, and other types of videos, the first video may be an edited video clip that has relatively high video views in the second video, a promotional video of the second video, or the like.

In an optional implementation, the first video and the second video may have a preset correspondence. When the preset trigger operation for the first play page of the first video is received, the second video corresponding to the first video may be obtained based on the preset correspondence. Specifically, a client may send a video identifier of the first video to a server. The server queries the second video corresponding to the first video, and sends the second video to the client. The client plays the second video based on a second play page.

In this embodiment of the present disclosure, the first play page is a page used to play the first video, that is, the first play page is a page used to play a video belonging to the short-form video type by using a short-form video player. Specifically, on the first play page, the first video may be played based on the short-form video player.

In this embodiment of the present disclosure, the preset trigger operation may include a trigger operation for a preset control on the first play page, where the trigger operation may be a click operation, a touch-and-hold operation, or the like acting on the preset control, used to trigger the obtaining of the second video corresponding to the first video.

In an optional implementation, the preset control may be arranged in a preset information display region on the first play page, where the preset information display region may be a region used to display related description information of the first video that is being played on the first play page, such as a title display region of the first video.

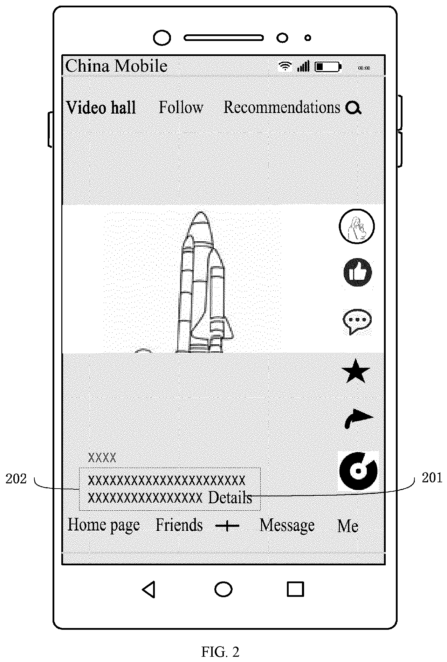

FIG. 2 is a schematic diagram of a first play page according to an embodiment of the present disclosure. In the figure, a preset control 201 is arranged in a preset information display region 202 on the first play page, and a text "Details" may be presented on the preset control, to prompt a user to trigger jumping to a second play page from the first play page through a trigger operation for the preset control.

In an optional implementation, a prompt text "Click on Details to view full video" may be presented at a preset lower location of the preset control, to prompt the user to trigger jumping to a second play page from the first play page through a trigger operation for the preset control, and have certain expectations for the play of the second video, thereby improving user experience.

S102: Jump to a second play page from the first play page, and play the second video on the second play page.

In this embodiment of the present disclosure, the second play page is a video play page used to play long-form videos, that is, the second play page is a page used to play videos based on a long-form video player, in other words, on the second play page, the second video may be played by using the long-form video player. In addition, the second play page further includes functional controls such as a play speed control that can control a long-form video play speed, and an episode selection control.

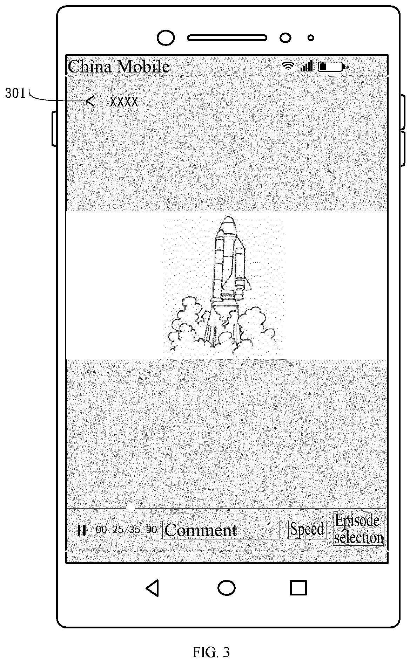

As shown in FIG. 2, when the trigger operation for the preset control 201 is received, the second video corresponding to the first video is obtained, and jumping to the second play page from the first play page shown in FIG. 2 is performed. FIG. 3 is a schematic diagram of a second play page according to an embodiment of the present disclosure. In the figure, the second video corresponding to the first video is played on the second play page.

In an optional implementation, after the jumping to the second play page from the first play page, the second video may be played from the beginning by playing from an initial time of the second video on the second play page.

In another optional implementation, to further enrich the video-based interaction function, when the preset trigger operation acting on the first play page of the first video is received, a current play progress of the first video is first obtained, then the jumping to the second play page from the first play page is performed, and a play start time of the second video is determined based on current play progress information of the first video and a play timeline relationship between the first video and the second video.

The play progress of the first video may be obtained as the current play progress information through a display progress of a play control progress bar on the first play page (the play control progress bar is used to display a play progress of a video that is currently being played on the first play page).

In this embodiment of the present disclosure, the play timeline relationship between the first video and the second video refers to a play time interval corresponding to the first video on a play timeline of the second video. For example, the first video may be a video clip corresponding to a play time interval of 00:20-00:30 in the second video, or the like.

In this embodiment of the present disclosure, the play start time of the second video may be determined based on the current play progress information of the first video, and the play timeline relationship between the first video and the second video. For example, assuming that the current play progress information of the first video is 00:05, and the play time interval of the first video in the second video is 00:20-00:30, it may be determined that the play start time of the second video is 00:25.

In this embodiment of the present disclosure, after the play start time of the second video is determined, the second video may be played on the second play page based on the play start time of the second video. For example, assuming that the play start time of the second video is 00:25, the second video continues to be played on the second play page based on the play progress of 00:25.

In the video-based interaction method according to this embodiment of the present disclosure, first, the second video corresponding to the first video is obtained in response to the preset trigger operation acting on the first play page of the first video. The first video includes some video clips in the second video, and the video duration of the first video is less than that of the second video. Then the jumping to the second play page from the first play page is performed, and the second video is played on the second play page. It can be learned that, for videos having some video clips in common but having different video duration, in this embodiment of the present disclosure, a jump can be made between video play pages, thereby enriching a video-based interaction function and improving the video-based interaction experience of a user.

In practical applications, to prompt the user to revisit the second video, in this embodiment of the present disclosure, the second play page may be further zoomed out to a preset display location on the first play page based on a preset page transition effect during the process in which the user exits from the play page of the second video, such that the user can realize revisit to the second video based on the zoomed-out second play page displayed at the preset display location.

In this embodiment of the present disclosure, the second play page is zoomed out to the preset display location on the first play page by using the preset page transition effect,
in response to a preset return operation acting on the second play page, where the preset display location is used to display an access entry for the second video.

In this embodiment of the present disclosure, the preset return operation may include a sliding operation acting on a preset edge region of the second play page, such as a rightward sliding operation acting on a left edge region of the second play page.

In addition, as shown in FIG. 3, a return control 301 may be arranged on the second play page. By clicking on the return control 301, or long pressing the return control 301, exit of the second play page may also be triggered, and the second play page is zoomed out to the preset display location on the first play page.

In practical applications, since the preset page transition effect has a certain prompt effect, the user can be effectively prompted to pay attention to the content of a special display location on the page, and the user can be further prompted to trigger an operation corresponding to the special display location. Therefore, in this embodiment of the present disclosure, the preset page transition effect may be used to realize the effect of zooming out the second play page to the preset display location on the first page, such that natural transition is achieved between the second play page and the first play page, and the user is effectively prompted to notice the access entry for the second video displayed at the preset display location. The preset page transition effect may include a mobile transition effect, a fade-in and fade-out effect, and the like, which may be determined based on actual needs in the practical applications, and is not limited in this embodiment of the present disclosure.

In an optional implementation, when the preset return operation acting on the second play page is received, the second play page may be zoomed out to the preset display location on the first play page according to a movement trajectory defined in the preset page transition effect, where the movement trajectory may be a straight line trajectory, a curve trajectory, or the like determined based on a display location of the second play page and the preset display location on the first play page, which is not limited in this embodiment of the present disclosure.

In this embodiment of the present disclosure, the preset display location on the first play page is used to display the access entry for the second video. Specifically, the preset display location may be determined based on the access entry for the second video. For example, the access entry for the second video may be arranged at a "video hall" tab 402 on the first play page.

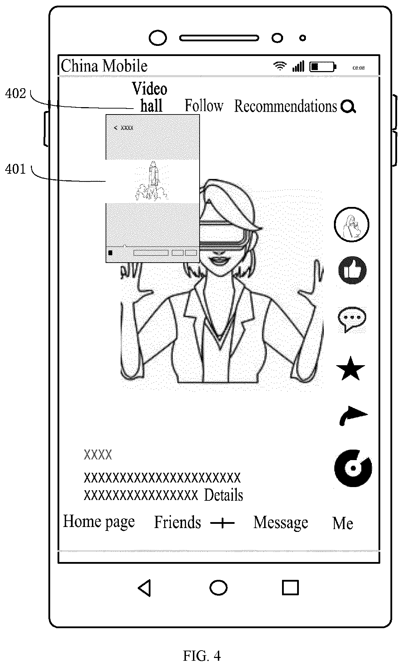

FIG. 4 is a schematic diagram of another first play page provided by an embodiment of the present disclosure. In the figure, a second play page 401 that is being zoomed out according to a preset page transition effect is presented on the first play page. The page shown in FIG. 4 is in an intermediate state where the second play page 401 is zoomed out to a preset display location on the first play page.

Since the preset page transition effect has a certain prompt effect, by using the preset page transition effect, the second play page is zoomed out to the preset display location used to display the access entry for the second video, thereby effectively prompting the user to notice the access entry for the second video on the first play page, and then reminding the user of a trigger operation for the access entry for the second video.

In an optional implementation, during the process of zooming out the second play page to the preset display location on the first play page by using the preset page transition effect, the second video may be continuously played on the second play page, or a certain video frame of the second video is displayed on the second play page.

The continuously playing the second video on the second play page refers to continuing to play the second video on the second video play page based on a current play progress of the second video.

The video frame of the second video may be a pause frame corresponding to pausing the play of the second video when the preset return operation acting on the second play page is received. This embodiment of the present disclosure does not limit other ways of obtaining a video frame of the second video.

In practical applications, after the second play page is zoomed out to the preset display location on the first play page by using the preset page transition effect, preset prompt information may be displayed at the preset display location on the first play page in response to the second play page displayed at the preset display location entering a hidden state.

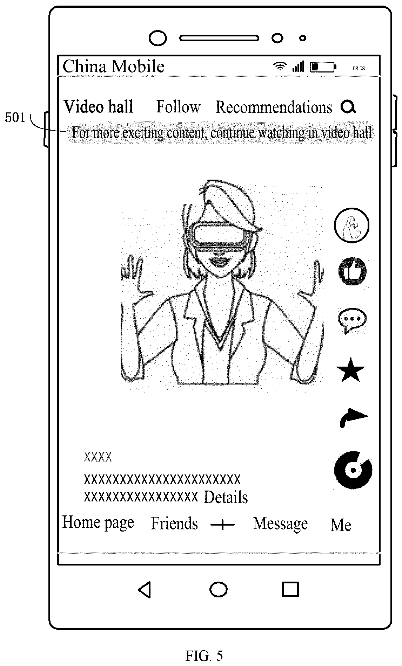

In practical applications, the preset prompt information may further be presented at the preset display location in the form of a bubble, when the second play page displayed at the preset display location entering the hidden state is received. Specifically, the preset prompt information may be presented by using a bubble pop-up window, to further prompt the user to notice the access entry for the second video on the first play page, thereby improving video-based interaction experience of a user. FIG. 5 is a schematic diagram of still another first play page provided by an embodiment of the present disclosure. Preset prompt information 501 is presented at the preset display location by using a bubble pop-up window, when the second play page displayed at the preset display location entering the hidden state is received, where the presentation content of the preset prompt information may be "For more exciting content, continue watching in video hall", used to prompt the user to notice the access entry for the second video, thereby further enriching the video-based interaction function, and improving the user experience.

In an optional implementation, in order not to affect user experience when watching a video, timing may be started when the preset prompt information is displayed at the preset display location on the first play page, and when a timing duration reaches a preset duration, the displayed preset prompt information is hidden. For example, assuming that the preset duration is 5 seconds, when the preset prompt information is displayed at the preset display location, the timing starts from 0:00, and the displayed preset prompt information is hidden when the timing duration reaches 5 seconds.

In practical applications, if the user wants to access a presentation page of the second video through the access entry on the first play page, jumping to a video set presentation page from the first play page may be triggered through a trigger operation for the access entry on the first play page, and the second video is presented in a first place on the video set presentation page.

In this embodiment of the present disclosure, the trigger operation may include a click operation, a long pressing operation and the like for the access entry on the first play page.

In this embodiment of the present disclosure, the video set presentation page is used to present videos of the same video type as the second video, where the video type may be determined based on video duration. For example, the video types determined based on the video duration may include long-form videos and short-form videos. Assuming that the second video is a long-form video with video duration of more than 30 minutes, the video with the video duration of more than 30 minutes may be partly presented on the video set presentation page.

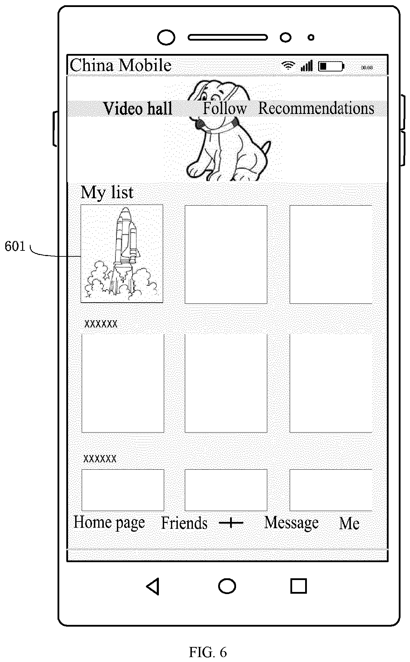

The jumping to the video set presentation page from the first play page is performed when the trigger operation for the access entry on the first play page is received. FIG. 6 is a schematic diagram of a video set presentation page according to an embodiment of the present disclosure. A second video 601 is presented in a first place on the video set presentation page, where all videos presented on the video set presentation page are videos with video duration of more than 30 minutes, such as movies, TV series, and documentaries.

In an optional implementation, to ensure video watching experience of the user, when receiving a preset return operation acting on the second play page and exiting the play of the second video, a third video may further be played on the first play page, thereby enriching a video-based interaction function and improving user experience.

In this embodiment of the present disclosure, the third video and the first video are videos of the same video type. For example, the third video and the first video may be short-form videos with video duration of 0 to 4 minutes. For example, the third video and the first video may be two adjacent videos in a same video stream, or may belong to different video streams.

It can be learned that, in this embodiment of the present disclosure, the effect of zooming out the second play page to the preset display location on the first play page can be realized by using the preset page transition effect, to prompt the user to pay attention to the access entry for the second video displayed at the preset display location, and can display the preset prompt information at the preset display location when the second play page enters the hidden state, to prompt the user to trigger, based on the access entry, the access operation for the second video, which further enriches the video-based interaction function, and improves the user experience.

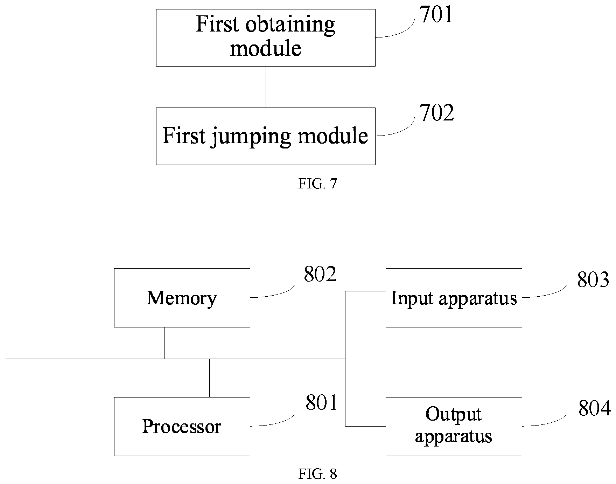

Based on the above method embodiment, the present disclosure further provides a video-based interaction apparatus. FIG. 7 is a schematic structural diagram of a video-based interaction apparatus according to an embodiment of the present disclosure. The apparatus includes:
a first obtaining module 701, configured to obtain, in response to a preset trigger operation acting on a first play page of a first video, a second video corresponding to the first video, where the first video includes some video clips in the second video, and video duration of the first video is less than that of the second video; and
a first jumping module 702, configured to jump to a second play page from the first play page, and play the second video on the second play page.

In an optional implementation, the apparatus further includes:
a zoom-out module, configured to zoom out the second play page to a preset display location on the first play page by using a preset page transition effect, in response to a preset return operation acting on the second play page, where the preset display location is used to display an access entry for the second video.

In an optional implementation, the apparatus further includes:
an information display module, configured to display preset prompt information at the preset display location on the first play page, in response to the second play page displayed at the preset display location entering a hidden state, where the preset prompt information is used to prompt triggering, based on the access entry, of an access operation for the second video.

In an optional implementation, the apparatus further includes:
a second jumping module, configured to, in response to a trigger operation for the access entry on the first play page, jump to a video set presentation page from the first play page, and present the second video in a first place on the video set presentation page where the video set presentation page is used to present videos of the same video type as the second video, and the video type is determined based on the video duration.

In an optional implementation, the apparatus further includes:
a play module, configured to play a third video on the first play page, where the third video and the first video are videos of the same video type, and the video type is determined based on the video duration.

In an optional implementation, the first obtaining module includes:
an obtaining sub-module, configured to obtain, in response to a trigger operation for a preset control on a first play page of a first video, a second video corresponding to the first video, where the preset control is arranged in a preset information display region on the first play page.

In an optional implementation, the apparatus further includes:
a second obtaining module, configured to obtain current play progress information of a first video in response to a preset trigger operation acting on the first play page of the first video; and
correspondingly, the first jumping module includes:
   a jump sub-module, configured to jump to a second play page from the first play page, and determine a play start time of the second video based on the current play progress information of the first video and a play timeline relationship between the first video and the second video; and
   a play sub-module, configured to play the second video on the second play page based on the play start time of the second video.

In the video-based interaction apparatus provided by this embodiment of the present disclosure, first, the second video corresponding to the first video is obtained in response to the preset trigger operation acting on the first play page of the first video. The first video includes some video clips in the second video. Then the jumping to the second play page from the first play page is performed, and the second video is played on the second play page. It can be learned that, for videos having some video clips in common but having different video duration, in this embodiment of the present disclosure, a jump can be made between video play pages, thereby enriching a video-based interaction function and improving the video-based interaction experience of a user.

In addition to the method and apparatus described above, an embodiment of the present disclosure further provides a computer-readable storage medium having instructions stored therein. The instructions, when run on a terminal device, cause the terminal device to implement the video-based interaction method described in the embodiments of the present disclosure.

An embodiment of the present disclosure further provides a computer program product. The computer program product includes a computer program/instructions. The computer program/instructions, when executed by a processor, cause the video-based interaction method described in the embodiments of the present disclosure to be implemented.

In addition, an embodiment of the present disclosure further provides a video-based interaction device, as shown in FIG. 8. The device may include:
a processor 801, a memory 802, an input apparatus 803, and an output apparatus 804. There may be one or more processors 801 in the video-based interaction device. For example, there is one processor in FIG. 8. In some embodiments of the present disclosure, the processor 801, the memory 802, the input apparatus 803, and the output apparatus 804 may be connected through a bus or in another manner. For example, they are connected through the bus in FIG. 8.

The memory 802 may be configured to store a software program and a module. The processor 801 performs various functional applications of the video-based interaction device and processes data by running the software program and the module stored in the memory 802. The memory 802 may mainly include a program storage area and a data storage area. The program storage area may store an operating system, an application required by at least one function, and the like. In addition, the memory 802 may include a highspeed random access memory, and may further include a non-volatile memory, such as at least one magnetic disk storage device, a flash memory device, or other volatile solid-state storage devices. The input apparatus 803 may be configured to receive entered numerical or character information, and generate a signal input related to a user setting and function control of the video-based interaction device.

Specifically, in this embodiment, the processor 801 loads an executable file corresponding to a process of one or more applications into the memory 802 in accordance with the following instructions, and the processor 801 runs the application stored in the memory 802, to implement various functions of the above video-based interaction device.

It should be noted that the relational terms such as "first" and "second" herein are only configured to distinguish one entity or operation from another, and do not necessarily require or imply that any actual relationship or sequence exists between these entities or operations. Moreover, the terms "include" and "comprise", or any of their variants are intended to cover a non-exclusive inclusion, so that a process, method, article, or device that includes a list of elements not only includes those elements but also includes other elements that are not expressly listed, or further includes elements inherent to such process, method, article, or device. In the absence of more restrictions, an element defined by "including a ..." does not exclude another identical element in a process, method, article, or device that includes the element.

The above description illustrates merely specific implementations of the present disclosure, so that a person skilled in the art can understand or implement the present disclosure. Various modifications to these embodiments are apparent to a person skilled in the art, and the general principle defined herein may be practiced in other embodiments without departing from the spirit or scope of the present disclosure. Therefore, the present disclosure is not limited to the embodiments described herein but is to be accorded the broadest scope consistent with the principle and novel features disclosed herein.

## Claims

1. A video-based interaction method, the method comprises:
obtaining, in response to a preset trigger operation acting on a first play page of a first video, a second video corresponding to the first video, wherein the first video comprises some video clips in the second video, and video duration of the first video is less than that of the second video; and
jumping to a second play page from the first play page, and playing the second video on the second play page.

2. The method according to claim 1, wherein after the playing the second video on the second play page, the method further comprises:
zooming out the second play page to a preset display location on the first play page by using a preset page transition effect, in response to a preset return operation acting on the second play page, wherein the preset display location is configured to display an access entry for the second video.

3. The method according to claim 2, wherein after the zooming out the second play page to a preset display location on the first play page by using a preset page transition effect, the method further comprises:
displaying preset prompt information at the preset display location on the first play page, in response to the second play page displayed at the preset display location entering a hidden state, wherein the preset prompt information is configured to prompt triggering, based on the access entry, of an access operation for the second video.

4. The method according to claim 2 or 3, wherein the method further comprises:
in response to a trigger operation for the access entry on the first play page, jumping to a video set presentation page from the first play page, and presenting the second video in a first place on the video set presentation page, wherein the video set presentation page is configured to present videos of the same video type as the second video, and the video type is determined based on the video duration.

5. The method according to any one of claims 2 to 4, wherein after the zooming out the second play page to a preset display location on the first play page by using a preset page transition effect, the method further comprises:
playing a third video on the first play page, wherein the third video and the first video are videos of the same video type, and the video type is determined based on the video duration.

6. The method according to any one of claims 1 to 5, wherein the obtaining, in response to a preset trigger operation acting on a first play page of a first video, a second video corresponding to the first video comprises:
obtaining the second video corresponding to the first video in response to a trigger operation for a preset control on the first play page of the first video, wherein the preset control is arranged in a preset information display region on the first play page.

7. The method according to any one of claims 1 to 6, wherein before the jumping to a second play page from the first play page, and playing the second video on the second play page, the method further comprises:
in response to a preset trigger operation acting on the first play page of the first video, obtaining current play progress information of the first video; and
correspondingly, the jumping to a second play page from the first play page, and playing the second video on the second play page comprises:
jumping to the second play page from the first play page, and determining a play start time of the second video based on the current play progress information of the first video and a play timeline relationship between the first video and the second video; and
playing the second video on the second play page based on the play start time of the second video.

8. A video-based interaction apparatus, the apparatus comprises:
a first obtaining module configured to obtain, in response to a preset trigger operation acting on a first play page of a first video, a second video corresponding to the first video, wherein the first video comprises some video clips in the second video, and video duration of the first video is less than that of the second video; and
a first jumping module configured to jump to a second play page from the first play page, and play the second video on the second play page.

9. A computer-readable storage medium having instructions stored therein, wherein the instructions, when run on a terminal device, cause the terminal device to implement a method according to any one of claims 1 to 7.

10. A video-based interaction device, comprising: a memory, a processor, and a computer program stored on the memory and runnable on the processor, wherein the processor, when executing the computer program, implements the method according to any one of claims 1 to 7.
